**Europäisches Patentamt**

**European Patent Office**

**Office européen des brevets**

(19)

(11) Veröffentlichungsnummer: **0 126 882**

**A2**

(12) **EUROPÄISCHE PATENTANMELDUNG**

(21) Anmeldenummer: **84103229.5**

(22) Anmeldetag: **23.03.84**

(51) Int. Cl.³: **H 02 B 1/24**

(30) Priorität: **31.03.83 DD 249423**

(43) Veröffentlichungstag der Anmeldung:
**05.12.84 Patentblatt 84/49**

(84) Benannte Vertragsstaaten:
**AT DE FR GB SE**

(71) Anmelder: **Institut Prüffeld für elektrische Hochleistungstechnik**
**Leninallee 376**
**DDR-1140 Berlin(DD)**

(72) Erfinder: **Hänisch, Heinz, Dr.-Ing.**
**Hartlebenstrasse 2**
**DDR-1162 Berlin(DD)**

(72) Erfinder: **Gerlach, Horst, Dr.-Ing.**
**Genslerstrasse 44**
**DDR-1125 Berlin(DD)**

(72) Erfinder: **Uhlmann, Wolfgang, Dr.-Ing.**
**Tschernyschewskistrasse 23**
**DDR-7025 Leipzig(DD)**

(72) Erfinder: **Kessler, Harald, Dipl.-Ing.**
**Steinberger Strasse 11**
**DDR-7050 Leipzig(DD)**

(72) Erfinder: **Pöppel, Karl-Heinz, Dipl.-Ing.**
**Thüringerstrasse 26**
**DDR-4803 Bad-Kösen(DD)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) **Schaltanlage zur Verteilung von Elektroenergie sowie Verfahren zum Betreiben der Schaltanlage.**

(57) Bei dieser Schaltanlage erfolgt die Verteilung von Elektroenergie in Industrie- und öffentlichen Netzen unter Verwendung von Leistungsschaltern (1) in der Einspeisung, von schnellen Trennern (9; 10; 11; 12) in den Abgängen (5; 6; 7; 8) und einer Hilfssammelschiene (4).

Zwecks Aufrechterhaltung einer hohen Versorgungszuverlässigkeit, insbesondere durch Vermeidung bzw. Verkürzung von Kurzunterbrechungen bei Schalthandlungen, und zwar in den Abgängen, in denen keine Betriebs- bzw. Störungsströme geschaltet werden, besitzt bei gleichzeitig optimalem Investitions- und Wartungsaufwand der Schaltanlage die Hilfssammelschiene (4) einen stark reduzierten Querschnitt, mit der einerseits ein jedem Abgang (5; 6; 7; 8) zugeordneter Hilfstrenner (13; 14; 15; 16), der parallel zu dem zu jedem Abgang (5; 6; 7; 8) gehörenden, an der Hauptsammelschiene (3) angeschlossenen Abgangstrenner (9; 10; 11; 12) angeordnet ist, verbunden ist und an die andererseits ein als Kuppelschalter dienender Leistungsschalter (2) angeschlossen ist, der gemeinsam mit dem Leistungsschalter (1) der Einspeisung ebenfalls mit der Hauptsammelschiene (3) in Verbindung steht.

Fig. 1

- 1 -

## Schaltanlage zur Verteilung von Elektroenergie sowie Verfahren zum Betreiben der Schaltanlage

Die Erfindung betrifft eine Schaltanlage zur Verteilung von Elektroenergie in Industrie- und öffentlichen Netzen unter Verwendung von Leistungsschaltern in der Einspeisung, von schnellen Trennern in den Abgängen und einer Hilfssammelschiene sowie ein Verfahren zum Betreiben der Schaltanlage.

Von Schaltanlagen zur Verteilung von Elektroenergie in Industrie- und öffentlichen Netzen wird u. a. gefordert, daß durch sie eine hohe Versorgungszuverlässigkeit und eine sichere Betriebsführung gewährleistet wird. In diesem Zusammenhang ist nach der DE - AS 1690739 eine vollisolierte Hochspannungsschaltanlage bekannt, bei der der für die Schalter notwendige Aufwand verringert werden soll. Dabei wird die Sammelschiene dieser Hochspannungsschaltanlage über einen Leistungsschalter gespeist, und die Schalter, über die die Abgänge an die Sammelschiene angeschlossen sind, sind schnellschaltende Trennschalter, die durch Verriegelung gegenüber dem Leistungsschalter betriebsmäßig in einer stromlosen Pause ausschaltbar sind, welche durch kurzzeitiges Öffnen des Leistungsschalters mittels eines Speicherantriebes für Kurzunterbrechung erzeugt wird. Bei dieser Schaltanlage ist zwar durch die Verwendung von schnellschaltenden Trennschaltern anstelle von Lasttrennschaltern eine Vereinfachung des Anlagenaufbaus zu verzeichnen, sie hat jedoch den Nachteil, daß bei notwendigen Betriebsschaltungen Kurzunterbrechungen in den Abgängen, in denen keine Betriebs- oder Störungsströme zu schalten sind, eintreten. Für zahlreiche Verbraucher, wie z.B. Leuchtstofflampen und Prozeßrechner sind derartige Kurzunterbrechungen nicht akzeptabel.

Hier will die Erfindung Abhilfe schaffen. Die Erfindung, wie sie in den Ansprüchen gekennzeichnet ist, löst die Aufgabe, eine Schaltanlage zur Verteilung von Elektroenergie sowie ein Verfahren zum Betreiben dieser Schaltanlage zu schaffen, bei der bei Betriebsschaltungen die betroffenen Abgänge auch kurzzeitig nicht spannungslos bzw. bei Störungsschalthandlungen nur kurzzeitig spannungslos werden, dadurch, daß die Schaltanlage eine Hilfssammelschiene mit einem stark reduzierten Querschnitt besitzt, mit der einerseits ein jedem Abgang zugeordneter Hilfstrenner, der parallel zu dem zu jedem Abgang gehörenden, an der Hauptsammelschiene angeschlossenen Abgangstrenner angeordnet ist, verbunden ist und an die andererseits ein als Kuppelschalter dienender Leistungsschalter angeschlossen ist, der gemeinsam mit dem Leistungsschalter der Einspeisung ebenfalls mit der Hauptsammelschiene in Verbindung steht.
Soll in Abhängigkeit von notwendigen Betriebsschaltungen diese Schaltanlage betrieben werden, so erfolgt dieses gemäß einem Verfahren, bei dem in einem oder mehreren Abgängen sämtliche Betriebsströme so geschaltet werden, daß zunächst der oder die Hilfstrenner in dem oder den Abgängen schließen, in denen Betriebsströme geschaltet werden und daran anschließend der als Kuppelschalter dienende Leistungsschalter eingeschaltet wird, und daß nachfolgend, nachdem der oder die Abgangstrenner des oder der Abgänge geöffnet worden sind, in denen Betriebsströme geschaltet werden, der oder die zu diesen Abgängen gehörenden Hilfstrenner öffnen, nachdem zuvor der als Kuppelschalter dienende Leistungsschalter mit stark reduzierter Strombahn ausgeschaltet wird.

Bei der Abschaltung von Störungsströmen wird zuerst der Leistungsschalter abgeschaltet und danach läuft das Schaltprogramm wie bei der Abschaltung von Betriebsströmen ab.
Sollen dagegen der oder die Abgänge, in denen Betriebs- oder Störungsströme geschaltet wurden, wieder eingeschaltet werden, so werden zunächst die zugehörigen Hilfstrenner wieder geschlossen und der als Kuppelschalter dienende Leistungsschalter eingeschaltet, während nunmehr der oder die Abgangstrenner geschlossen und nachfolgend der als Kuppelschalter dienende Leistungsschalter wieder ausgeschaltet wird und der oder die Hilfstrenner geöffnet werden.

Obwohl bei Fehlerabschaltung bei Kurzschluß eine kurzzeitige Unterbrechung der Abgänge erfolgt, die nicht durch einen Kurzschluß betroffen sind, ist es mittels der erfindungsgemäßen Schaltanlage möglich, auch Fehlerabschaltungen vorzunehmen, indem nach Abtrennung des Fehlers vom vorgeschalteten Netz durch den Leistungsschalter der Einspeisung die Abschaltung des betroffenen Abganges erfolgt. Dabei wird zunächst nach dem Schließen des zugehörigen Hilfstrenners und nachfolgendem Einschalten des als Kuppelschalter dienenden Leistungsschalters der Abgangstrenner geöffnet und dann nach dem Ausschalten des als Kuppelschalter dienenden Leistungsschalters und nachfolgendem Einschalten des Leistungsschalters der Einspeisung der Hilfstrenner geöffnet.

Die durch die Erfindung erzielten Vorteile sind somit im wesentlichen darin zu sehen, daß bei Aufrechterhaltung einer hohen Versorgungszuverlässigkeit und

- 4 -

Gewährleistung einer sicheren Betriebsführung bei einem optimalen Investitionsaufwand vor allen Dingen erreicht wird, daß bei Betriebsschaltungen die betroffenen Abgänge auch kurzzeitig nicht spannungslos bzw. bei Störungsschalthandlungen nur kurzzeitig spannungslos werden. Dabei werden die nicht betroffenen Abgänge bei Betriebsschaltungen unterbrechungslos weiterversorgt, während bei Störungsschalthandlungen diese Abgänge nur kurzzeitig unterbrochen werden.

Im folgenden wird die Erfindung anhand von ein Ausführungsbeispiel darstellenden Zeichnungen näher erläutert. Es zeigen

Figur 1 eine Schaltung für eine Schaltanlage, durch die eine Anwendung des erfindungsgemäßen Verfahrens gegeben ist,

Figur 2 ein Betätigungsdiagramm für die Schaltgeräte nach Fig. 1 für eine Betriebsaus- und -einschaltung,

Figur 3 ein Betätigungsdiagramm für die Schaltgeräte nach Fig. 1 für eine Fehlerausschaltung.

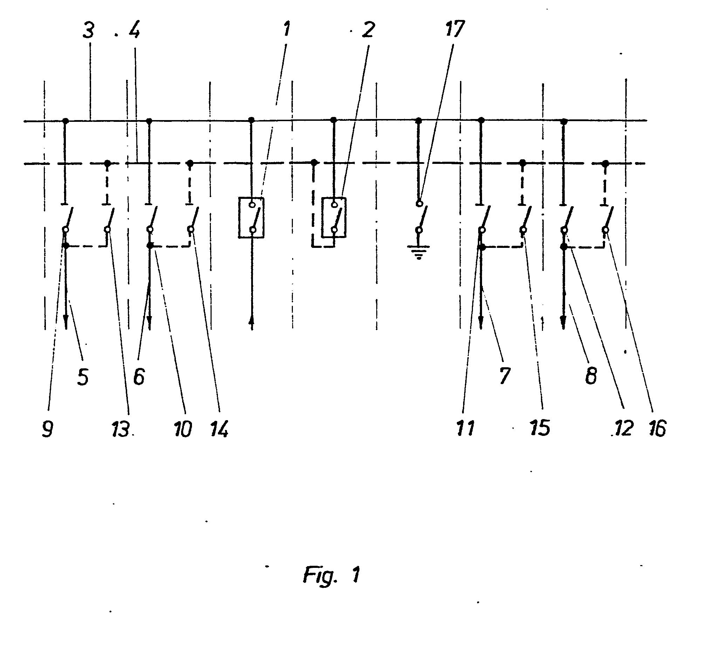

Wie Fig. 1 zeigt, enthält die Schaltanlage zur Verteilung von Elektroenergie in Industrie- und öffentlichen Netzen in der Einspeisung den Leistungsschalter 1, der gemeinsam mit dem als Kuppelschalter dienenden Leistungsschalter 2 an der Hauptsammelschiene 3 angeschlossen ist. Andererseits ist der als Kuppelschalter dienende Leistungsschalter 2 jedoch an der Hilfssammelschiene 4 mit stark reduziertem Querschnitt angeschlossen, so daß er sich praktisch zwischen der Hauptsammelschiene 3 und der Hilfssammelschiene 4 mit stark reduziertem Querschnitt befindet. Über die Hauptsammelschiene 3 werden die Abgänge 5; 6; 7; 8 gespeist, denen jeweils ein als schneller Trenner ausgebildeter Abgangstrenner 9; 10; 11; 12 zugeordnet ist. Parallel zu den Abgangstrennern 9; 10; 11; 12 ist je ein Hilfstrenner 13; 14; 15; 16 vorgesehen, die an der Hilfs-

sammelschiene 4 mit stark reduziertem Querschnitt angeschlossen sind. Diese Schaltanlage kann selbstverständlich um eine für die Betriebsführung sinnvolle Anzahl von Abgängen erweitert werden. Es besteht auch die Möglichkeit, daß eine zweite Einspeisung über eine getrennte nicht weiter dargestellte Hauptsammelschiene erfolgt, die über einen ebenfalls nicht weiter dargestellten Trenner gekoppelt sind. Um bei Ausschaltvorgängen oder bei Störlichtbögen eine schnelle Lichtbogenlöschung zu erzielen und um ggf. bei Oberspannung eine Spannungsbegrenzung vorzunehmen, so daß eine Reduzierung der Beanspruchung der nachgeschalteten Anlagen und eine Vereinfachung des Netzschutzes erreicht wird, kann die Schaltanlage auch mit einem superschnellen Kurzschließer 17 versehen sein, der ebenfalls an die Hauptsammelschiene 3 angeschlossen ist und im Fehlerfalle in Abstimmung mit dem Leistungsschalter 1 betätigt wird. Die durch die Schaltanlage beabsichtigten Wirkungen sind jedoch an das Vorhandensein des superschnellen Kurzschließers 17 nicht gebunden.

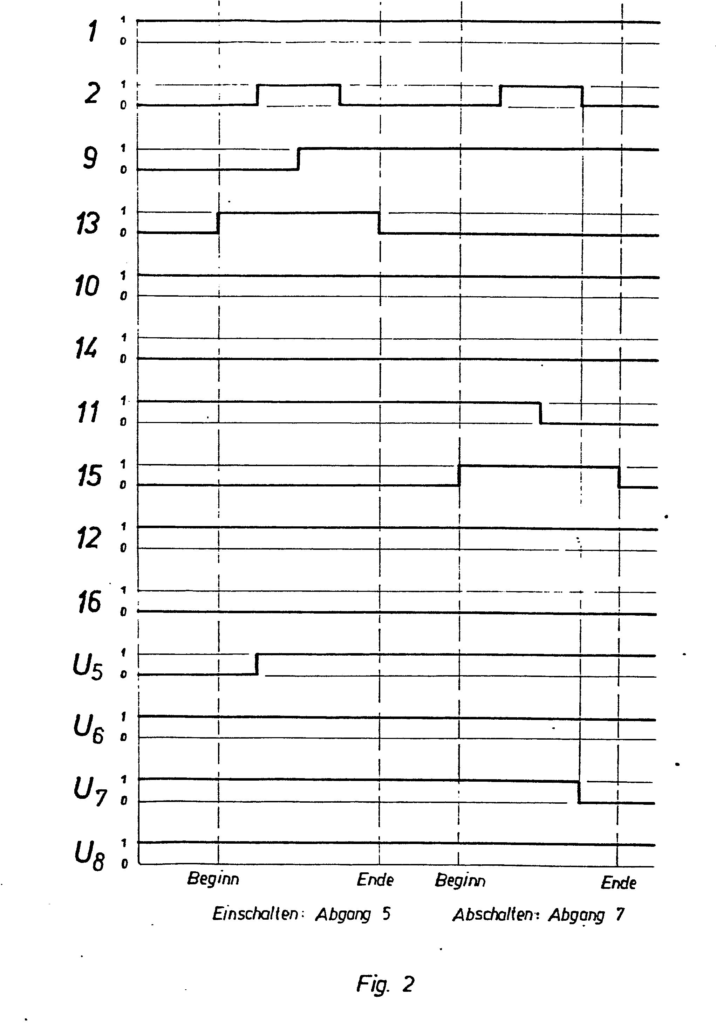

Das in Fig. 2 dargestellte Betätigungsdiagramm zeigt den Ablauf der Schalthandlungen, wie sie, durch eine ebenfalls nicht weiter dargestellte Automatisierungseinrichtung gesteuert, für das Einschalten des Abganges 5 bzw. für das Ausschalten des Abganges 7 bei Betriebsschaltungen erforderlich sind.

Dabei bedeuten in dem Betätigungsdiagramm die diskreten Zustände 0 bzw. 1:

- Schaltgerät Aus oder Spannung Null, was dem dargestellten Zustand 0 entspricht,

- Schaltgerät Ein oder Spannung vorhanden, was den dargestellten Zustand 1 entspricht.

Soll nun ein Einschalten des Abganges 5 erfolgen, so wird zunächst bei eingeschaltetem Leistungsschalter 1, über den bereits die Abgänge 6; 7; 8 an Spannung liegen, der Hilfstrenner 13 geschlossen und der als Kuppelschalter dienende Leistungsschalter 2 eingeschaltet, so daß der Abgang 5 zunächst über den Hilfstrenner 13 und den als Kuppelschalter ausgebildeten Leistungsschalter 2 an Spannung liegt. Nach dem Schließen des Abgangstrenners 9 erfolgt eine Rücknahme des als Kuppelschalter dienenden Leistungsschalters 2, und auch der Hilfsschalter 13 wird durch Öffnen in seine Ausgangsstellung gebracht. Das aber bedeutet, daß nunmehr der Abgang 5 über den Leistungsschalter 1 sowie über den Abgangstrenner 9 an Spannung liegt.

Das Ausschalten des Abganges 7 erfolgt ebenfalls ohne Beeinflussung der Abgänge 5; 6; 8, indem zunächst der Hilfstrenner 15 geschlossen wird und daran anschließend der als Kuppelschalter dienende Leistungsschalter 2 eingeschaltet wird, so daß in der ersten Phase des Ausschaltvorganges der Abgang 7 über den Leistungsschalter 1, den als Kuppelschalter dienenden Leistungsschalter 2 und über den Hilfstrenner 15 angeschlossen ist. Nachdem nunmehr der Abgangstrenner 11 fast stromlos geöffnet worden ist, erfolgt eine Rücknahme des als Kuppelschalter dienenden Leistungsschalters 2 in die Ausgangsstellung, so daß nun auch der Hilfstrenner 15 stromlos geöffnet werden kann.

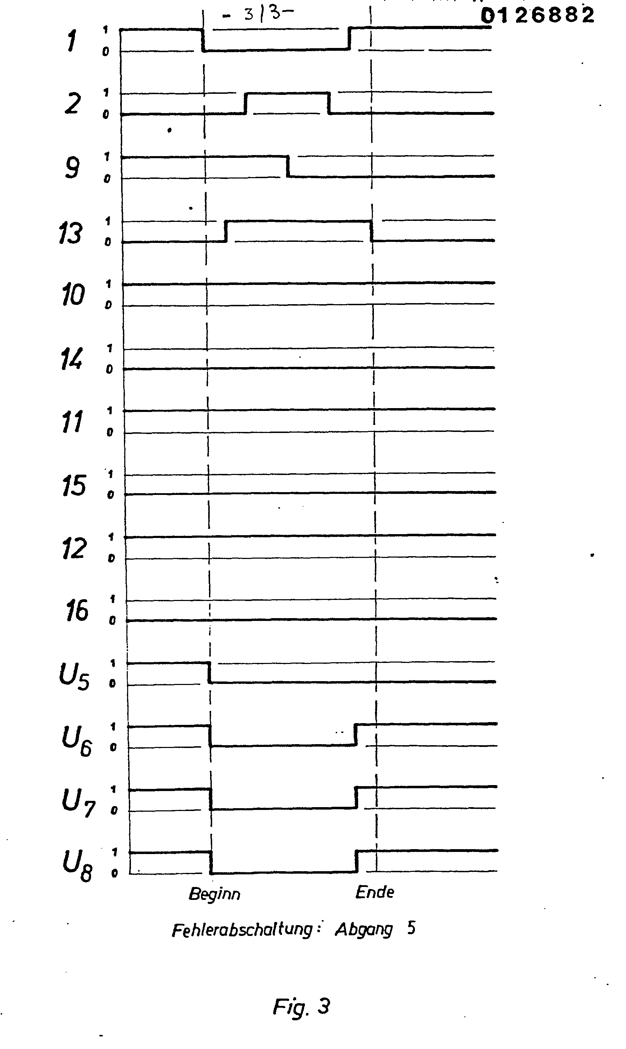

Das in Fig. 3 gezeigte Betätigungsdiagramm, das die Schaltfolge der Schaltgeräte bei einer Fehlerabschaltung bei Kurzschluß in Abgang 5 kennzeichnet, läßt erkennen, daß zunächst der Fehler vom vorgeschalteten Netz durch den Leistungsschalter 1 abgeschaltet wird. Nachdem der Hilfstrenner 13 geschlossen ist und auch der als Kuppelschalter dienende Leistungsschalter 2 eingeschaltet worden ist, wird der Abgangstrenner 9 ge-

öffnet. Anschließend wird der als Kuppelschalter dienende Leistungsschalter 2 ausgeschaltet, der Leistungsschalter 1 eingeschaltet - nunmehr erfolgt auch wieder
eine Versorgung der Abgänge 6; 7; 8 - und der Hilfstrenner 13 geöffnet.

Patentansprüche:

1. Schaltanlage zur Verteilung von Elektroenergie in Industrie- und öffentlichen Netzen unter Verwendung von Leistungsschaltern (1) in der Einspeisung, von schnellen Trennern (9; 10; 11; 12) in den Abgängen (5; 6; 7; 8) und einer Hilfssammelschiene (4), dadurch gekennzeichnet, daß die Hilfssammelschiene (4) einen stark reduzierten Querschnitt besitzt, mit der einerseits ein jedem Abgang (5; 6; 7; 8) zugeordneter Hilfstrenner (13; 14; 15; 16), der parallel zu dem zu jedem Abgang (5; 6; 7; 8) gehörenden, an der Hauptsammelschiene (3) angeschlossenem Abgangstrenner (9; 10; 11; 12) angeordnet ist, verbunden ist und an die andererseits ein als Kuppelschalter dienender Leistungsschalter (2) angeschlossen ist, der gemeinsam mit dem Leistungsschalter (1) der Einspeisung ebenfalls mit der Hauptsammelschiene (3) in Verbindung steht.

2. Schaltanlage nach Patentanspruch 1, bei dem für den als Kuppelschalter dienenden Leistungsschalter (2) ein Lastschalter mit stark reduzierter Strombahn vorgesehen ist.

3. Verfahren zum Betreiben der Schaltanlage nach Patentanspruch 1, dadurch gekennzeichnet, daß in Abhängigkeit von notwendigen Betriebsschaltungen in einem oder mehreren Abgängen (5; 6; 7; 8) sämtliche Betriebsströme derart geschaltet werden, daß zunächst der oder die Hilfstrenner (13; 14; 15; 16) in dem oder den Abgängen (5; 6; 7; 8) schließen, in denen Betriebsströme geschaltet werden, und daran anschließend der als Kuppelschalter dienende Leistungsschalter (2) eingeschaltet wird, und daß nachfolgend, nachdem der oder die Abgangstrenner (9; 10; 11; 12) des oder der Abgänge (5; 6; 7; 8) geöffnet worden sind, in denen Betriebsströme geschaltet werden, der oder die zu diesen Abgängen (5; 6; 7; 8) gehörenden Hilfstrenner (13; 14; 15; 16) öffnen, nachdem zuvor der als Kuppelschalter dienende Leistungsschalter (2) ausgeschaltet wird, während bei der Abschaltung von Störungsströmen zuerst der Leistungsschalter (1) abschaltet und danach wie bei der Abschaltung von Betriebsströmen das Schaltprogramm abläuft.

4. Verfahren nach Patentanspruch 3, bei dem bei Einschaltung des oder der Abgänge (5; 6; 7; 8), in denen Betriebs- oder Störungsströme geschaltet wurden, zunächst die zugehörigen Hilfstrenner (13; 14; 15; 16) geschlossen werden und der als Kuppelschalter dienende Leistungsschalter (2) eingeschaltet wird und nachfolgend nach dem Schließen des oder der Abgangstrenner (9; 10; 11; 12) der als Kuppelschalter dienende Leistungsschalter (2) ausgeschaltet wird und der oder die Hilfstrenner (13; 14; 15; 16) geöffnet werden.

Fig. 1

0126882

Einschalten: Abgang 5          Abschalten: Abgang 7

Fig. 2

0126882

Fehlerabschaltung : Abgang 5

Fig. 3